**Europäisches Patentamt**

**European Patent Office**

**Office européen des brevets**

(19)

(11) **EP 1 508 366 A1**

(12) **EUROPÄISCHE PATENTANMELDUNG**

(43) Veröffentlichungstag:
**23.02.2005 Patentblatt 2005/08**

(51) Int Cl.⁷: **B01J 2/04**

(21) Anmeldenummer: **04013949.5**

(22) Anmeldetag: **15.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **25.07.2003 DE 10333957**

(71) Anmelder: **Fraunhofer-Gesellschaft zur Förderung der angewandten Forschung e.V. 80636 München (DE)**

(72) Erfinder:
• **Teipel, Ulrich, Prof. Dr.-Ing. 76327 Pfinztal (DE)**

• **Heintz, Thomas, Dipl.-Ing. 76327 Pfinztal (DE)**

(74) Vertreter:
**Lempert, Jost, Dipl.-Phys. Dr. rer.nat. et al Patentanwälte, Dipl.-Ing. Heiner Lichti, Dipl.-Phys. Dr. rer. nat. Jost Lempert, Dipl.-Ing. Hartmut Lasch, Postfach 41 07 60 76207 Karlsruhe (DE)**

(54) **Verfahren und Vorrichtung zum Herstellen sphärischer Partikel aus Ammoniumnitrat (AN) mit enger Grössenverteilung**

(57) Ein Verfahren zum Herstellen von sphärischen Partikeln aus einem Oxidator für Treib- und/oder Explosivstoffe, wie Ammoniumnitrat (AN) oder Ammoniumdinitramid (ADN), wobei der Oxidator zunächst in einem Schmelzbehälter geschmolzen und anschließend mittels einer Sprüheinrichtung zerstäubt wird, zeichnet sich dadurch aus, dass die Schmelze beim Austreten aus dem Schmelzbehälter unter im wesentlichen konstantem Druck gehalten wird. Eine zur Durchführung des erfindungsgemäßen Verfahrens geeignete Vorrichtung mit einem Schmelzbehälter zum Schmelzen des Oxidators und zur Aufnahme der Schmelze, der einen Ausgang in Verbindung mit einer Sprüheinrichtung zum Zerstäuben der Schmelze aufweist, zeichnet sich dementsprechend dadurch aus, dass die Schmelze am Ausgang des Schmelzbehälters unter im wesentlichen konstantem Druck haltbar ist. Dies kann durch Druckbeaufschlagung der Schmelze im Schmelzbehälter oder durch Konstanthalten eines Füllstands der Schmelze erfolgen. Auf diese Weise wird ohne eine kostenintensive und zeitaufwändige Nachbearbeitung des Endprodukts eine einheitliche, enge Größenverteilung der Oxidator-Partikel erhalten.

EP 1 508 366 A1

Printed by Jouve, 75001 PARIS (FR)

**Beschreibung**

Die Erfindung betrifft ein Verfahren zum Herstellen von sphärischen Partikeln aus einem Oxidator für Treibund/oder Explosivstoffe, insbesondere Ammoniumnitrat (AN), wobei der Oxidator zunächst in einem Schmelzbehälter geschmolzen und anschließend mittels einer Sprüheinrichtung zerstäubt wird. Sie betrifft weiterhin eine Vorrichtung zum Herstellen von sphärischen Partikeln aus einem Oxidator für Treib- und/oder Explosivstoffe, insbesondere Ammoniumnitrat (AN) oder Ammoniumdinitramid (ADN), mit einem Schmelzbehälter zum Schmelzen des Oxidators und zur Aufnahme der Schmelze, der eine Sprüheinrichtung zum Zerstäuben der Schmelze aufweist.

Oxidatoren für Treib- und/oder Explosivstoffe wie Ammoniumnitrat (AN) oder Ammoniumdinitramid (ADN), besitzen in weiteren Bereichen der Technik selbst eine große Bedeutung. Sie werden vor allem in Raketen und in Gasgeneratoren für Airbags eingesetzt. Dabei sind in der Anwendung sowohl in Bezug auf die Herstellung als auch im Rahmen der weiteren Verarbeitung sphärische Partikel mit möglichst regelmäßiger und einheitlicher Kornform erwünscht.

Vor allem im Hinblick auf ein kontrollierbares Abbrandverhalten von Treibsätzen, die mit Hilfe derartiger Oxidator-Partikel hergestellt werden, kommt einer einheitlichen Partikelgröße, d.h. einer möglichst engen Größenverteilung der im Zuge eines Verfahrens bzw. einer Vorrichtung der eingangs genannten Art erzeugten sphärischen Partikel ein besonderer Stellenwert zu. In diesem Zusammenhang weisen die entsprechenden Verfahren bzw. Vorrichtungen nach dem Stand der Technik erhebliche Nachteile auf:

> Bei dem bisher eingesetzten Verfahren bzw. Vorrichtung der eingangs genannten Art strömt eine Schmelze des Oxidatormaterials, beispielsweise eine AN-Schmelze, unter dem Einfluss der Schwerkraft durch eine Sprüheinrichtung und kristallisiert anschließend zu sphärischen Partikeln, deren Größenverteilung sich im Verlauf des Herstellungsverfahrens stark verbreitert. Dies wurde bislang aufgrund der hohen Reaktivität des Ausgangsmaterials (Explosionsgefahr) billigend in Kauf genommen und im Anschluss an die Partikelherstellung durch entsprechend aufwändige Siebverfahren oder dergleichen im Zuge einer nachträglichen Aufbereitung des Endprodukts teilweise ausgeglichen. Aus Sicherheitsgründen kann AN-Schmelze nicht mittels Pumpen oder anderer Druckförderern gefördert werden.

Der Erfindung liegt die Aufgabe zugrunde, ein Verfahren und eine Vorrichtung der eingangs genannten Art zum Herstellen von sphärischen Partikeln aus einem Oxidator für Treibund/oder Explosivstoffe, insbesondere AN oder ADN, vorzuschlagen, mit denen sich auf sichere und zuverlässige Weise eine möglichst enge Größenverteilung des Endproduktes erreichen lässt, so dass aufwändige und kostenintensive nachträgliche Aufbereitungen des Endprodukts entfallen können.

Diese Aufgabe wird bei einem Verfahren der eingangs genannten Art dadurch gelöst, dass die Schmelze beim Austreten aus dem Schmelzbehälter unter im wesentlichen konstantem Druck gehalten wird. Bei der Vorrichtung der eingangs genannten Art wird zur Lösung der Aufgabe vorgeschlagen, dass die Schmelze am Ausgang des Schmelzbehälters unter im wesentlichen konstantem Druck haltbar ist.

Durch den Einsatz des erfindungsgemäßen Verfahrens bzw. der erfindungsgemäßen Vorrichtung wird verhindert, dass bei der Herstellung von sphärischen AN-Partikeln mit zunehmender Sprühzeit eine sich verbreiternde Partikelgrößenverteilung entsteht, wodurch die Nachteile herkömmlicher Verfahren und Vorrichtungen überwunden werden, bei denen mit zunehmender Sprühzeit mehr Fein- und Großgut erzeugt wird, so dass sich im zeitlichen Verlauf der Herstellung deutlich unterschiedliche Partikel ergeben. Das erfindungsgemäße Verfahren bzw. die erfindungsgemäße Vorrichtung sind insbesondere für Oxidatoren, wie AN oder ADN, geeignet, da eine solche Schmelze aus sicherheitstechnischen Gründen nicht mittels Pumpen oder anderen Druckförderern transportiert werden kann.

Eine erste grundlegende Ausgestaltung des erfindungsgemäßen Verfahrens sieht vor, dass die Schmelze durch eine Druckbeaufschlagung unter im wesentlichen konstantem Druck gehalten wird. Vorzugsweise erfolgt dabei die Druckbeaufschlagung mittels eines Inertgases, wie Stickstoff. Entsprechend sieht eine Weiterbildung der erfindungsgemäßen Vorrichtung regelbare Druckbeaufschlagungsmittel vor, durch die die Schmelze am Ausgang unter im wesentlichen konstantem Druck haltbar ist. Die Druckbeaufschlagungsmittel können entsprechend zum Beaufschlagen der Schmelze mit einem Inertgas, wie Stickstoff, ausgebildet sein. Durch den Einsatz eines Inertgases lässt sich eine erhöhte Explosionsneigung der Schmelze aufgrund der Druckbeaufschlagung weitestgehend ausschalten.

Entsprechende Weiterbildungen des erfindungsgemäßen Verfahrens sehen vor, dass die Druckregelung manuell oder automatisch erfolgt. Die erfindungsgemäße Vorrichtung weist entsprechend entweder eine manuell betätigbare oder eine automatisch arbeitende Druckregelungseinrichtung auf. Auf diese Weise lässt sich je nach Anwendungsart des erfindungsgemäßen Verfahrens bzw. einem Einsatzzweck der erfindungsgemäßen Vorrichtung eine optimal angepasste und kontrollierbare Druckregelung realisieren.

Um die Schmelze während des Zerstäubungsvorgangs unter dem angestrebten, im wesentlichen konstanten Druck halten zu können, ist verfahrenstechnisch weiterhin vorgesehen, dass laufend ein hydrostatischer Druck der Schmelze bestimmt wird und dass die Druckbeaufschlagung in einem Maße erfolgt, in dem sich der hydrostatische Druck der Schmelze verändert. Da sich der Gesamtdruck des durch die Sprüheinrichtung austretenden Materials aus dem hydrostatischem Druck der Schmelze und einem ggf. vorhandenen äußeren Druck additiv zusammensetzt, ist auf diese Weise während des gesamten Zerstäubungsvorgangs für einen im wesentlichen konstanten Druck gesorgt. Im Zuge einer bevorzugten Weiterbildung weist dementsprechend die erfindungsgemäße Vorrichtung eine Druckbestimmungsanordnung zum Bestimmen eines hydrostatischen Drucks der Schmelze auf. Diese ist vorzugsweise als Druckmesseinrichtung zum direkten Bestimmen des hydrostatischen Drucks der Schmelze ausgebildet, so dass im Rahmen einer bevorzugten Ausführung des erfindungsgemäßen Verfahrens der hydrostatische Druck der Schmelze mittels einer Druckmesseinrichtung direkt gemessen wird. Es ist alternativ auch möglich, dass laufend ein Füllstand der Schmelze in dem Schmelzbehälter bestimmt wird und dass anschließend in einer Druckregelungseinrichtung aus dem Füllstand der hydrostatische Druck der Schmelze bestimmt wird.

Je nach angestrebter Größenverteilung der erzeugten sphärischen Oxidator-Partikel kann dabei der kontstante Druck der Schmelze im wesentlichen einen umgebenden Atomsphärendruck entsprechen oder gegenüber diesem erhöht sein. Grundsätzlich erzeugt ein höherer Druck eine schmalere Größenverteilung und eine geringere Teilchengröße.

Gemäß einer zweiten grundlegenden Ausgestaltung des erfindungsgemäßen Verfahrens ist vorgesehen, dass die Schmelze durch Konstanthalten eines Füllstandes im Schmelzbehälter unter konstantem Druck gehalten wird. Der Füllstand kann dabei, wie auch im Falle der vorstehend erläuterten, ersten grundlegenden Ausführung des erfindungsgemäßen Verfahrens, mittels einer Füllstandsmesseinrichtung direkt bestimmt werden. Alternativ ist es in beiden Fällen auch möglich, den Füllstand der Schmelze in dem Schmelzbehälter näherungsweise aus einem Massenstrom an der Sprüheinrichtung zu bestimmen, wobei der Massenstrom entweder mittels eines geeigneten Massenmessers bestimmt oder aus gewissen bekannten Erfahrungswerten empirisch abgeleitet werden kann.

Dementsprechend sehen Weiterbildungen der erfindungsgemäßen Vorrichtung vor, dass diese eine Füllstandbestimmungseinrichtung zum Bestimmen eines Füllstands-Wertes der Schmelze in dem Schmelzbehälter aufweist. Weiter kann sich eine erfindungsgemäße Vorrichtung durch Füllhöhenregelmittel auszeichnen, durch die die Schmelze über den Füllstands-Wert am Ausgang unter im wesentlichen konstantem Druck haltbar ist, ggf. in Verbindung mit Rechenmitteln zum Bestimmen des hydrostatischen Drucks der Schmelze aus dem Füllstands-Wert. Es ist somit im Rahmen dieser letzten Weiterbildung möglich, den hydrostatischen Druck der Schmelze - insbesondere im Zuge des ersten grundlegenden, erfindungsgemäßen Verfahrens - indirekt rechnerisch zu bestimmen, ohne dass hier für eine direkte Druckmessung im Schmelzbehälter erforderlich wäre.

Die Füllstandsbestimmungseinrichtung kann einerseits als Füllstandsmesseinrichtung zum direkten Bestimmen des Füllstands ausgebildet sein. Andererseits sieht eine Variante der Erfindung vor, dass die Füllstandsbestimmungseinrichtung zum Bestimmen eines Werts für einen Massenstrom durch die Sprüheinrichtung ausgebildet ist und dass die vorstehend genannten Rechenmittel weiterhin zum Bestimmen des Füllstands aus dem Massenstrom-Wert eingerichtet sind. Im letzteren Fall ist es möglich, das erfindungsgemäße Verfahren bzw. die erfindungsgemäße Vorrichtung vollständig ohne Messeinrichtungen im Inneren des Schmelzbehälters anzuwenden bzw. zu betreiben, was aus sicherheitstechnischen Gründen angezeigt sein kann.

Nach einer äußerst bevorzugten Weiterbildung des erfindungsgemäßen Verfahrens ist vorgesehen, dass im Falle einer explosiven Reaktion der Schmelze über eine Druckausgleichseinrichtung ein kontrollierter Druckausgleich mit der Umgebung erfolgt. Die erfindungsgemäße Vorrichtung weist hierzu vorzugsweise eine Druckausgleichseinrichtung zum Ermöglichen eines kontrollierten Druckausgleichs mit der Umgebung auf, der im Zuge einer speziellen Weiterentwicklung des Erfindungsgegenstandes als Berstscheibe ausgebildet sein kann.

Die Sprüheinrichtung ist zum Erreichen einer möglichst einfachen und kompakten Bauweise der erfindungsgemäßen Vorrichtung im Zuge einer äußerst bevorzugten Ausgestaltung derselben direkt am Schmelzbehälter angeordnet.

Weitere Vorteile und Eigenschaften der Erfindung ergeben sich aus der nachfolgenden Beschreibung von Ausführungsbeispielen anhand der Zeichnung. Es zeigt:

Fig. 1 eine schematische Darstellung einer ersten Ausgestaltung der erfindungsgemäßen Vorrichtung zum Herstellen von sphärischen Partikeln aus Ammoniumnitrat (AN) nach dem ersten grundlegenden Verfahren der Erfindung;

Fig. 2 eine zweite Ausgestaltung der erfindungsgemäßen Vorrichtung der Fig. 1;

Fig. 3 eine weitere Ausgestaltung der erfindungsgemäßen Vorrichtung der Fig. 1; und

Fig. 4 verschiedene alternative Ausgestaltungen einer erfindungsgemäßen Vorrichtung nach dem zweiten grundlegenden Verfahren der Erfindung.

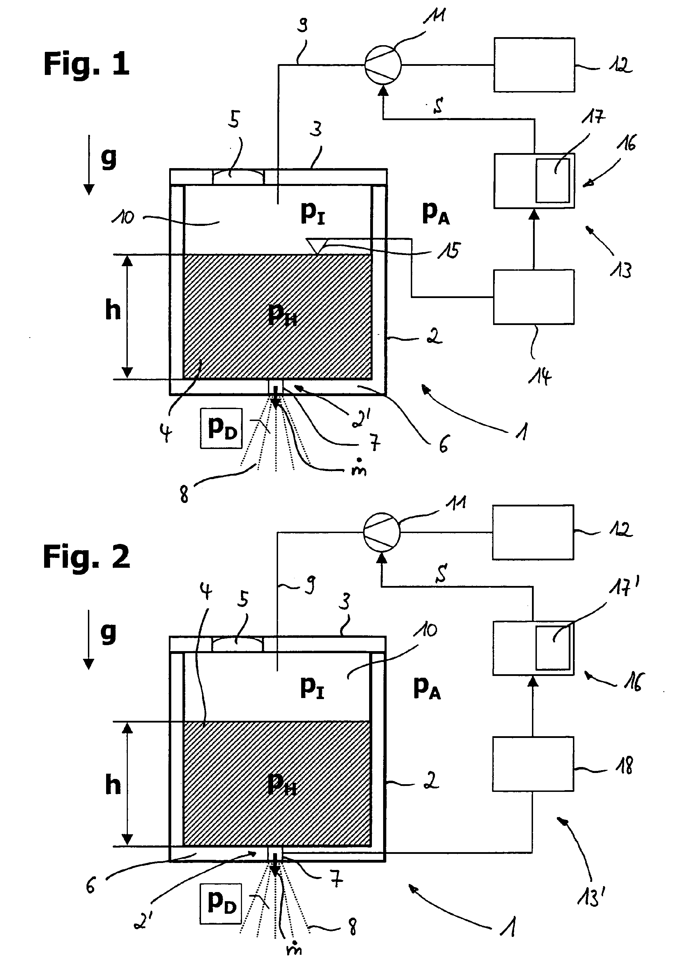

Die Fig. 1 zeigt schematisch eine erste Ausgestaltung der erfindungsgemäßen Vorrichtung zur Herstellung von sphärischen Partikeln aus einem Oxidator für Treib- und/oder Explosivstoffe, hier speziell aus Ammoniumnitrat (AN). Diese weist einen Schmelzreaktor 1 auf, der im wesentlichen aus einem temperierbaren Schmelzbehälter 2 mit Deckel 3 besteht. Der Schmelzbehälter 2 ist bis zu einer gewissen, im Verlauf des Herstellungsverfahrens zeitlich veränderlichen Füllhöhe h (Füllstand) mit einer AN-Schmelze 4 gefüllt. Der Deckel 3 des Schmelzbehälters 2 weist aus sicherheitstechnischen Gründen mindestens eine Druckausgleichseinrichtung in Form einer Berstscheibe 5 auf. Im Boden 6 des Schmelzbehälters 2 ist im Bereich eines Ausgangs 2' des Schmelzbehälters 2 eine Sprüheinrichtung in Form einer Düse 7 vorgesehen, mittels derer ein Teil der Schmelze 4 zum Herstellen sphärischer AN-Partikel zerstäubbar ist, wie in Fig. 1 anhand einiger Sprühstrahlen 8 examplarisch dargestellt.

Durch den Deckel 3 des Schmelzbehälters 2 ist weiterhin eine Gaszuführleitung 9 geführt, über die ein Innenraum 10 des Schmelzbehälters 2 oberhalb der Schmelze 4 mit einem Druck $p_I$ beaufschlagbar ist. Die Gaszuführleitung 9 ist über einen Verdichter 11 mit einem Gasreservoir 12 verbunden. Weiterhin umfasst die Ausgestaltung der erfindungsgemäßen Vorrichtung nach Fig. 1 eine Füllstandsbestimmungseinrichtung 13 zum Bestimmen eines Füllstands-Werts h der Schmelze 4 in dem Schmelzbehälter 2. Diese setzt sich aus einer Füllstandsmesseinrichtung 14 zum direkten Bestimmen des Füllstandes h und einem geeigneten Füllstandsanzeigemittel 15 zusammen. Die Füllstandsbestimmungseinrichtung 13 steht in Verbindung mit einer Druckregelungseinrichtung 16, die Rechenmittel 17 zum Bestimmen eines Druckregelungssignals S enthält, durch das auf die Druckbeaufschlagungsmittel einwirkbar ist.

Im Zuge der Herstellung sphärischer AN-Partikel mit der in Fig. 1 gezeigten erfindungsgemäßen Vorrichtung nach dem ersten grundlegenden Verfahren der Erfindung nimmt aufgrund des Massenstroms m durch die Düse 7 der hydrostatische Druck der AN-Schmelze 4 im Inneren des Schmelzbehälters 2 sukzessive ab. Dabei ergibt sich der hydrostatische Druck der Schmelze 4 aus der einfachen Beziehung

$$p_H = \rho * g * h,$$

wobei $\rho$ die Dichte der Schmelze 4 und g die Schwerebeschleunigung bezeichnen. Mit der Abnahme des hydrostatischen Drucks $p_H$ der Schmelze 4 geht daher eine Abnahme des Füllstands h einher, die erfindungsgemäß mittels der Füllstandsbestimmungseinrichtung 13 nachgewiesen wird. Mittels der in der Druckregelungseinrichtung 16 enthaltenen Rechenmittel 17 lässt sich aus der gemessenen Füllstandshöhe h in einfacher Weise ein Druckregelungssignal S für den Verdichter 11 berechnen, woraufhin dieser über die Gaszuführleitung 9 den Innenraum 10 des Schmelzbehälters 2 mit einem zeitlich zunehmenden Druck $p_I$ beaufschlagt, der gerade die Abnahme des hydrostatischen Drucks $p_H$ ausgleicht, so dass der Gesamtdruck $p_D = p_h + p_I$, mit dem die zerstäubte Schmelze aus der Düse 7 austritt, zeitlich im wesentlichen konstant bleibt. Der Druck $p_I$ kann dabei größer sein als ein Umgebungsdruck $p_A$ oder diesem im wesentlichen entsprechen. Somit bilden im Rahmen der Ausgestaltung gemäß Fig. 1 die Füllstandsbestimmungseinrichtung 13 und die Druckregelungseinrichtung 16 (zumindest deren Rechenmittel 17) eine Druckbestimmungsanordnung zum Bestimmen des hydrostatischen Drucks $p_H$ der Schmelze 4. Durch die Düse 7 im Boden 6 des Schmelzbehälters 2 tritt daher ein zeitlich konstanter Massenstrom $\dot{m}$ der AN-Schmelze 4, der insbesondere mit einer zeitlich konstanten Geschwindigkeitsverteilung des aus der Düse 7 austretenden AN-Staubs einhergeht, was dazu führt, dass keine Verbreiterung der Größenverteilung der erzeugten sphärischen AN-Partikel mit der Zeit während des Herstellungsprozesses auftritt.

Sollte es innerhalb des durch den Deckel 3 geschlossenen Schmelzreaktors 1 zu einer ungewollten explosiven Reaktion der AN-Schmelze 4 kommen, so ist über die Berstscheibe 5, die eine "Sollbruchstelle" des Deckels 3 darstellt, dafür gesorgt, dass ein kontrollierter Druckausgleich mit der Umgebung stattfinden kann und es zu keiner katastrophalen Zerstörung des gesamten Schmelzreaktors 1 bzw. der gesamten erfindungsgemäßen Vorrichtung kommt.

Die Fig. 2 zeigt eine weitere erfindungsgemäße Ausgestaltung einer Vorrichtung zur Herstellung sphärischer AN-Partikel mit enger Größenverteilung, wiederum nach dem oben anhand der Fig. 1 beschriebenen Verfahren. Anstelle der Füllstandsbestimmungseinrichtung 13 der Fig. 1 weist die Vorrichtung gemäß Fig. 2 eine Füllstandsbestimmungseinrichtung 13' auf, die mittels eines geeigneten Massenmessers 18 zum Bestimmen eines Wertes für den Massenstrom $\dot{m}$ durch die Düse 7 des Schmelzreaktors 1 ausgebildet ist. Die in der Druckregelungseinheit 16 der Fig. 2 enthaltenen Rechenmittel 17' sind dementsprechend zum Bestimmen des Füllstandes h im Schmelzbehälter 2 aus dem mittels des Massenmessers 18 bestimmenden Massenstromwert $\dot{m}$ eingerichtet.

Alternativ lässt sich auch ohne direkte Bestimmung des Massenstroms bei angenommener Konstantheit desselben der Füllstand h allein aus einer zeitlichen Dauer des Sprühvorgangs ableiten.

Nach erfolgter Umsetzung des Massenstrom-Werts m in einen gegenwärtigen Füllstand h und anschließend in einen gegenwärtigen hydrostatischen Druck $p_H$ erfolgt analog zu den Ausführungen zur Fig. 1 eine Druckbeaufschlagung des Innenraums 10 des Schmelzbehälters 2 dergestalt, dass der Gesamtdruck $p_D = p_I + p_h$ konstant ist.

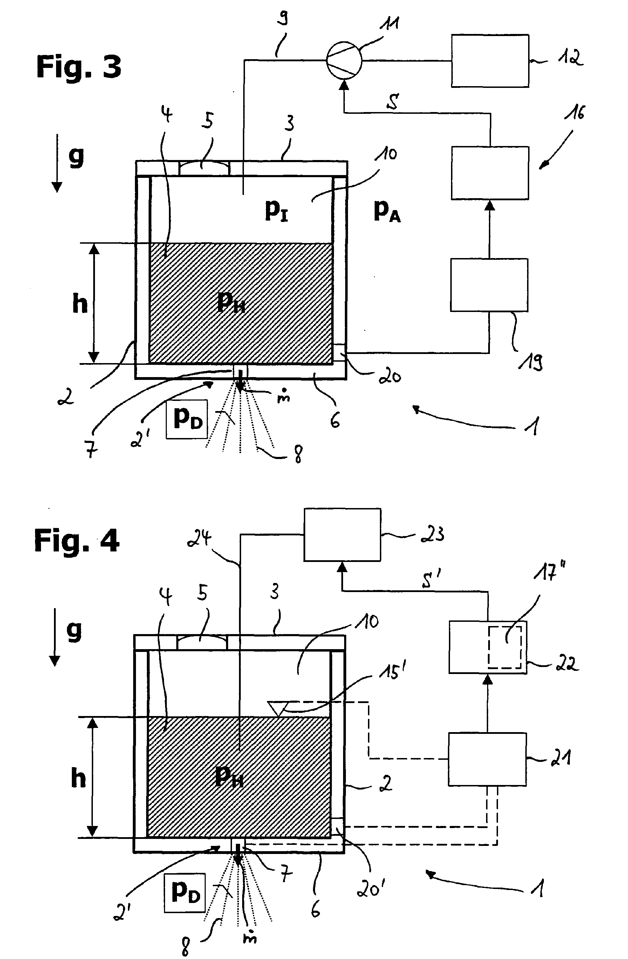

In der Fig. 3 ist eine weitere Ausgestaltung der erfindungsgemäßen Vorrichtung zum Durchführen des ersten grundlegenden, erfindungsgemäßen Verfahrens gezeigt, bei der der Schmelzreaktor 1 anstelle der Füllstandsmesseinrichtungen 13, 13' der Fig. 1 und 2 eine Druckmesseinrichtung 19 mit direkt am Schmelzbehälter 2 angeordnetem Drucksensor 20 aufweist, über die der hydrostatische Druck $p_H$ der Schmelze 4 im Schmelzbehälter 2 direkt messbar ist. Ein so erhaltenes Messsignal für den hydrostatischen Druck $p_H$ wird über die Druckregelungseinheit 16 direkt zum Verdichter 11 weitergeleitet, woraufhin wieder die bereits vorstehend erläuterte Druckbeaufschlagung des Innenraums 10 des Schmelzbehälters 2 erfolgt.

Die Fig. 4 zeigt eine weitere Ausgestaltung der erfindungsgemäßen Vorrichtung zum Durchführen des zweiten grundlegenden, erfindungsgemäßen Verfahrens, wobei ein im wesentlichen konstanter Druck $p_D$ am Ausgang 2' des Schmelzbehälters 2 durch Konstanthalten des Füllstands h der Schmelze 4 im Schmelzbehälter 2 erreicht wird.

Dazu weist die erfindungsgemäße Vorrichtung gemäß der Fig. 4 zusätzlich zu dem bereits genannten Schmelzbehälter 2, der analog zum Gegenstand der Fig. 1 bis 3 einen Deckel 3 mit Berstscheibe 5 sowie einen Boden 6 mit Düse 7 aufweist und zum Aufnehmen einer AN-Schmelze 4 ausgebildet ist, eine Messeinrichtung 21 auf, die alternativ entweder zum Bestimmen einer Durchflussmasse durch die Düse 7, zum direkten Bestimmen des hydrostatischen Drucks $p_H$ der Schmelze 4 mittels eines Drucksensors 20' oder zum direkten Bestimmen des Füllstands h mittels eines Füllstandsanzeigemittels 15' ausgebildet ist. Die vorstehend aufgelisteten, alternativen Ausgestaltungen der erfindungsgemäßen Vorrichtung gemäß Fig. 4 sind zeichnerisch anhand von gestrichelten Linien, die von der Messeinrichtung 21 ausgehen, dargestellt.

Die Messeinrichtung 21 steht in Wirkverbindung mit einer Füllhöhenregelungseinrichtung 22, die für den Fall, dass die Messeinrichtung 21 nicht zum direkten Bestimmen der Füllhöhe h ausgebildet ist (siehe oben), optional Rechenmittel 17' ' (gestrichelt dargestellt) zum Ermitteln des Füllstands im Schmelzbehälter 2 aus der durch die Messeinrichtung 21 bestimmten Größe (Druck, Masse) aufweisen kann. Die Füllhöhenregelungseinrichtung 22 ist zum Liefern eines Füllhöhensteuersignals S' an ein Reservoir 23 für das Schmelzenmaterial ausgebildet. Bei dem Reservoir 23 kann es sich beispielsweise um ein Feststoff-Reservoir handeln, aus dem das zu schmelzende Material über eine Zuführleitung 24 direkt in den Schmelzbehälter 2 eingebracht und dort geschmolzen wird. Alternativ kann es sich bei dem Reservoir 23 um ein Schmelzenreservoir handeln, in dem das betreffende Material bereits in geschmolzenem Zustand vorliegt. Ggf. kann auch die Zuführleitung 24 geeignete, hier nicht gezeigte (Vor-)Schmelzeinrichtungen aufweisen, um das aus dem Reservoir 23 stammende Material auf seinem Weg in den Schmelzbehälter zu schmelzen bzw. in einem geschmolzenem Zustand zu halten.

Bei Verwendung der erfindungsgemäßen Vorrichtung gemäß Fig. 4 ist es möglich, die Füllhöhe h der Schmelze 4 im Schmelzbehälter 2 über die Zeit im wesentlichen konstant zu halten. Gemäß der vorstehend genannten Beziehung

$$p_H = \rho * g * h$$

ergibt sich so aufgrund der im wesentlichen konstanten Füllhöhe h ein ebenfalls im wesentlichen konstanter hydrostatischer Druck $p_H$ der Schmelze 4 am Ausgang 2' des Schmelzbehälters 2, indem ständig bei einem durch die Messeinrichtung 21 erfassten Absinken der Füllhöhe h über ein entsprechendes Füllhöhensteuersignal S' ein Zuführen von Material aus dem Reservoir 23 in den Schmelzbehälter 2 erfolgt.

Das Ergebnis der erfindungsgemäßen Verfahren bzw. des vorstehend erläuterten Einsatzes der erfindungsgemäßen Vorrichtungen sind sphärische AN-Partikel mit enger, einheitlicher Größenverteilung, wodurch kostspielige und (zeit-)aufwändige Nachbearbeitungsschritte des Endproduktes entfallen.

**Bezugszeichenliste**

| | |
|---|---|
| 1 | Schmelzreaktor |
| 2 | Schmelzbehälter |
| 2' | Ausgang |
| 3 | Deckel |
| 4 | Schmelze |
| 5 | Berstscheibe |
| 6 | Boden |
| 7 | Düse |
| 8 | Sprühstrahlen |
| 9 | Gaszuführleitung |
| 10 | Innenraum |
| 11 | Verdichter |
| 12 | Gasreservoir |
| 13, 13' | Füllstandsbestimmungseinrichtung |
| 14 | Füllstandsmesseinrichtung |
| 15, 15' | Füllstandsanzeigemittel |
| 16 | Druckregelungseinrichtung |
| 17, 17', 17'' | Rechenmittel |
| 18 | Massemesser |
| 19 | Druckmesseinrichtung |
| 20, 20' | Drucksensor |
| 21 | Messeinrichtung |
| 22 | Füllhöhenregelungseinrichtung |
| 23 | Reservoir |
| 24 | Zuführleitung |
| h | Füllstand |
| g | Schwerebeschleunigung |
| $\dot{m}$ | Massestrom |
| $P_A$ | Umgebungsdruck |
| $P_D$ | Gesamtdruck |
| pi | Beaufschlagungsdruck |

$p_H$     hydrostatischer Druck
S       Druckregelungssignal
S'      Füllhöhenregelungssignal

**Patentansprüche**

1. Verfahren zum Herstellen von sphärischen Partikeln aus einem Oxidator für Treib- und/oder Explosivstoffe, insbesondere Ammoniumnitrat (AN), wobei der Oxidator zunächst in einem Schmelzbehälter geschmolzen und anschließend mittels einer Sprüheinrichtung zerstäubt wird, **dadurch gekennzeichnet, dass** die Schmelze beim Austreten aus dem Schmelzbehälter unter im wesentlichen konstantem Druck gehalten wird.

2. Verfahren nach Anspruch 1, **dadurch gekennzeichnet, dass** die Schmelze durch eine Druckbeaufschlagung unter im wesentlichen konstantem Druck gehalten wird.

3. Verfahren nach Anspruch 2, **dadurch gekennzeichnet, dass** die Druckbeaufschlagung mittels eines Inertgases, wie Stickstoff, erfolgt.

4. Verfahren nach Anspruch 2 oder 3, **dadurch gekennzeichnet, dass** die Druckregelung manuell erfolgt.

5. Verfahren nach Anspruch 2 oder 3, **dadurch gekennzeichnet, dass** die Druckregelung automatisch erfolgt.

6. Verfahren nach einem der Ansprüche 2 bis 5, **dadurch gekennzeichnet, dass** laufend ein hydrostatischer Druck der Schmelze bestimmt wird und dass die Druckbeaufschlagung in einem Maße erfolgt, in dem sich der hydrostatische Druck der Schmelze verändert.

7. Verfahren nach Anspruch 6, **dadurch gekennzeichnet, dass** der hydrostatische Druck der Schmelze mittels einer Druckmesseinrichtung direkt gemessen wird.

8. Verfahren nach Anspruch 6, **dadurch gekennzeichnet, dass** laufend ein Füllstand der Schmelze in dem Schmelzbehälter bestimmt wird und dass anschließend in einer Druckregelungseinrichtung der hydrostatische Druck der Schmelze aus dem Füllstand bestimmt wird.

9. Verfahren nach einem der Ansprüche 2 bis 8, **dadurch gekennzeichnet, dass** der Druck im wesentlichen einem umgebenden Atmosphärendruck entspricht.

10. Verfahren nach einem der Ansprüche 2 bis 8, **dadurch gekennzeichnet, dass** der Druck gegenüber einem umgebenden Atomsphärendruck erhöht ist.

11. Verfahren nach Anspruch 1, **dadurch gekennzeichnet, dass** die Schmelze durch Konstanthalten eines Füllstandes im Schmelzbehälter unter konstantem Druck gehalten wird.

12. Verfahren nach einem der Ansprüche 8 bis 11, **dadurch gekennzeichnet, dass** der Füllstand mittels einer Füllstandsmesseinrichtung direkt bestimmt wird.

13. Verfahren nach einem der Ansprüche 8 bis 11, **dadurch gekennzeichnet, dass** der Füllstand näherungsweise aus einem Massenstrom an der Sprüheinrichtung bestimmt wird.

14. Verfahren nach einem der Ansprüche 1 bis 13, **dadurch gekennzeichnet, dass** im Falle einer explosiven Reaktion der Schmelze über eine Druckausgleichseinrichtung ein kontrollierter Druckausgleich mit der Umgebung erfolgt.

15. Vorrichtung zum Herstellen von sphärischen Partikeln aus einem Oxidator für Treib- und/oder Explosivstoffe, insbesondere Ammoniumnitrat (AN), mit einem Schmelzbehälter zum Schmelzen des Oxidators und zur Aufnahme der Schmelze, der einen Ausgang in Verbindung mit einer Sprüheinrichtung zum Zerstäuben der Schmelze aufweist, **dadurch gekennzeichnet, dass** die Schmelze (4) am Ausgang (2') des Schmelzbehälters (2) unter im wesentlichen konstantem Druck ($p_D$) haltbar ist.

16. Vorrichtung nach Anspruch 15, **gekennzeichnet durch** regelbare Druckbeaufschlagungsmittel (9, 11, 12), **durch** die die Schmelze (4) am Ausgang (2') unter im wesentlichen konstantem Druck ($p_D$) haltbar ist.

17. Vorrichtung nach Anspruch 16, **dadurch gekennzeichnet, dass** die Druckbeaufschlagungsmittel (9, 11, 12) zum Beaufschlagen der Schmelze (4) mit einem Inertgas, wie Stickstoff, ausgebildet sind.

18. Vorrichtung nach Anspruch 16 oder 17, **gekennzeichnet durch** eine manuell betätigbare Druckregelungseinrichtung (16).

19. Vorrichtung nach Anspruch 16 oder 17, **gekennzeichnet durch** eine automatisch arbeitende Druckregelungseinrichtung (16).

20. Vorrichtung nach einem der Ansprüche 16 bis 19, **gekennzeichnet durch** eine Druckbestimmungsanordnung zum Bestimmen eines hydrostatischen Drucks ($p_H$) der Schmelze (4).

21. Vorrichtung nach Anspruch 20, **dadurch gekennzeichnet, dass** die Druckbestimmungsanordnung als Druckmesseinrichtung (19) zum direkten Bestimmen des hydrostatischen Drucks ($p_H$) der Schmelze (4) ausgebildet ist.

22. Vorrichtung nach einem der Ansprüche 15 bis 21, **gekennzeichnet durch** eine Füllstandsbestimmungseinrichtung (13, 13') zum Bestimmen eines Füllstands-Wertes (h) der Schmelze (4) in dem Schmelzbehälter (2).

23. Vorrichtung nach Anspruch 15 mit dem kennzeichnenden Merkmal des Anspruchs 22, **gekennzeichnet durch** Füllhöhenregelmittel (22), **durch** die die Schmelze (4) über den Füllstands-Wert (h) am Ausgang (2') unter im wesentlichen konstantem Druck ($p_D$) haltbar ist.

24. Vorrichtung nach Anspruch 22 oder 23, **gekennzeichnet durch** Rechenmittel (17, 17') zum Bestimmen des hydrostatischen Drucks ($p_H$) der Schmelze (4) aus dem Füllstands-Wert (h).

25. Vorrichtung nach einem der Ansprüche 22 bis 24, **dadurch gekennzeichnet, dass** die Füllstandsbestimmungseinrichtung (13) als Füllstandsmesseinrichtung (14) zum direkten Bestimmen des Füllstandes (h) ausgebildet ist.

26. Vorrichtung nach einem der Ansprüche 22 bis 24, **dadurch gekennzeichnet, dass** die Füllstandsbestimmungseinrichtung (13) zum Bestimmen eines Wertes für einen Massenstrom ($\dot{m}$) durch die Sprüheinrichtung (7) ausgebildet ist und dass die Rechenmittel (17') weiterhin zum Bestimmen des Füllstands (h) aus dem Massenstrom-Wert ($\dot{m}$) eingerichtet sind.

27. Vorrichtung nach einem der Ansprüche 15 bis 26, **dadurch gekennzeichnet, dass** mittels der Druckbeaufschlagungsmittel (9, 11, 12) ein Druck ($p_I$) über der Schmelze (4) erreichbar ist, der größer oder gleich einem umgebenden Atmosphärendruck ($p_A$) ist.

28. Vorrichtung nach einem der Ansprüche 15 bis 27, **gekennzeichnet durch** eine Druckausgleichseinrichtung (5) zum Ermöglichen eines kontrollierten Druckausgleichs mit der Umgebung im Falle einer explosiven Reaktion der Schmelze (4).

29. Vorrichtung nach Anspruch 28, **dadurch gekennzeichnet, dass** die Druckausgleichseinrichtung (5) als Berstscheibe ausgebildet ist.

30. Vorrichtung nach einem der Ansprüche 15 bis 29, **dadurch gekennzeichnet, dass** die Sprüheinrichtung (7) direkt am Schmelzbehälter (2) angeordnet ist.

**Fig. 1**

**Fig. 2**

**Fig. 3**

g

4  5  3  9  11  12

$p_I$

$p_A$

10

16

h

$p_H$

S

2

7  2'  $p_D$  $\dot{m}$  6  20  19  1

8

**Fig. 4**

g

24  3  23

4  5

10

15'

17"

h

$p_H$

$p_H$

S'

22

2

7  20'

6

21

2'  $p_D$  1

8  $\dot{m}$

**Europäisches Patentamt**

**EUROPÄISCHER RECHERCHENBERICHT**

Nummer der Anmeldung

EP 04 01 3949

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2 994 101 A (MULLEN JR CHARLES V) 1. August 1961 (1961-08-01) * Spalte 1, Zeile 30 - Zeile 70 * ----- | 1-30 | B01J2/04 |

RECHERCHIERTE SACHGEBIETE (Int.Cl.7)

B01J

Der vorliegende Recherchenbericht wurde für alle Patentansprüche erstellt

| Recherchenort | Abschlußdatum der Recherche | Prüfer |
|---|---|---|
| Berlin | 27. Dezember 2004 | Clement, J-P |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 01 3949

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-12-2004

| Im Recherchenbericht angeführtes Patentdokument | Datum der Veröffentlichung | Mitglied(er) der Patentfamilie | Datum der Veröffentlichung |
|---|---|---|---|
| US 2994101 A | 01-08-1961 | KEINE | |

EPO FORM P0461

Für nähere Einzelheiten zu diesem Anhang : siehe Amtsblatt des Europäischen Patentamts, Nr.12/82